Europäisches Patentamt

European Patent Office

Office européen des brevets

(11) Publication number: **0 206 001**
**A1**

## EUROPEAN PATENT APPLICATION

(21) Application number: **86107449.0**

(22) Date of filing: **02.06.86**

(51) Int. Cl.⁴: **C 03 B 5/23**

(30) Priority: **11.06.85  GB 8514756**

(43) Date of publication of application: **30.12.86**
**Bulletin 86/52**

(84) Designated Contracting States: **DE FR IT**

(71) Applicant: **TECO/ELEMELT LIMITED, Pensnett House Pensnett Estate, Kingswinford West Midlands DY6 7PP (GB)**

(72) Inventor: **Charlesworth, Donald, Poniou Road Long Rock Industrial Estate, Penzance Cornwall, TR20 8XH (GB)**

(74) Representative: **Lally, William et al, FORRESTER & BOEHMERT Widenmayerstrasse 4/I, D-8000 München 22 (DE)**

(54) **Method of and furnace for melting glass.**

(57)  A cold-top glass melting furnace comprises an open-topped furnace chamber (16), a plurality of vertical electrodes (E1–E4) extending through the bottom wall (14) into the chamber (16). Mounted above the open-top of the furnace, one on either side of the axis A of primary movement of the glass through the furnace, are two pipe systems (18, 20). When during operation of the furnace it becomes desirable to reduce the pull rate, one or both pipe systems are lowered through the blanket of batch material a short distance below the transition zone at which melting of the batch material normally takes place. In this manner horizontally-extending "rafts" of cooled, high viscosity glass are formed over areas coextending with the pipe system, reducing the rate at which batch material is melted, and permitting the pull rate to be reduced.

**Title:** "Method of and furnace for melting glass"

This invention is concerned with improvements relating to the melting of glass, particularly by the use of cold-top furnaces.

In the manufacture of glass or the like heat-fuseable vitreous materials (hereinafter included in the term "glass" for convenience of reference) conventionally there is used a furnace (herein referred to as being of the kind specified) comprising a furnace chamber containing a body of molten glass, heating means for heating the body of molten glass, and outlet means through which glass is conducted from the chamber. Conveniently, the body of molten glass is heated electrically, using Joule effect heating, said heating means comprising a plurality of electrodes extending into the furnace chamber. Conventionally the furnace is open-topped, allowing solid state glass batch material to be delivered into the furnace chamber onto the body of molten glass therein.

In the use of such a furnace, the whole of the upper surface of the body of glass is covered by a relatively cool layer of batch material to a generally uniform thickness. The lower surface of this layer continuously melts away to join the body of the molten glass in the chamber, whilst molten glass is withdrawn from outlet means, advantageously from a lower portion of the chamber, whilst fresh batch material in continually spread over the upper surface to replace the melted material.

It is in practice desirable to retain the thickness of the layer of batch material substantially constant, or within upper and lower limits, which depend upon the chemical and physical nature of the mixture of raw matrials included in the batch material, the temperture of the body of molten glass, and the specific rate of melting of the lower surface of the layer.

In the production of a particular glass, only very limited adjustment of the chemical and physical nature of the raw materials if feasible, and the production of glass of satisfactory quality depends upon maintaining the body of molten glass at a substantially constant temperature. Thus, the need to maintain the layer of batch material imposes limitations on the rate of removal of glass from the furnace. For example with a particular type of glass being produced, and with a specific furnace, the ratio of the highest and lowest rates of removal which can be tolerated (known as the production range) is limited.

0206001

- 2 -

In many glass manufacturing operations, even when producing only a single glass composition, it is highly desirable to increase the production range. In addition, some furnaces are required to melt two or more types of glass each having different characteristics with respect of the formation of the layer of batch material, which further effects the flexibility of a specific furnace.

In the specification of U.K. Patent No. 1 542 278 there is described a furnace of the kind specified, having means for varying the area of molten glass which is exposed for the reception of batch material, together with feeding mechanism to deliver batch material to the furnace chamber, and which is capable of delivering batch material of the whole of the surface of molten glass, and which has associated therewith control means which is operative to restrict the area of the molten glass to which the feeding mechanism delivers solid state material. In the embodiments described and illustrated in said specification, the barrier means may be provided by a roof structure, or by ceramic tiles which may be positioned on the body of molten glass in the furnace chamber.

However the furnace described in said specification is at times limited in its reliability and/or versatility.

In addition it may at times be desirable to increase the temperature at which the furnace is operating, to achieve a superior refining of the melted glass than would otherwise be provided, without the necessity for increasing the rate of production of melted glass, and/or reducing the thickness the blanket of batch material.

According to this invention there is provided a method of melting glass involving the use of a glass melting furnace of the kind specified, in which heat is removed from the material within the furnace at a region adjacent to the interface between the molten glass and the blanket of batch material.

In this manner, the temperature of the molten glass in said region may be reduced, reducing the rate at which batch material is melted, enabling the following operational advantages to be obtained:

a) the furnace may be operated at a lower pull rate without reduction to the operating temperature of the furnace and hence without a reduction to the refining of the glass;

b) the temperature of the furnace may be increased, increasing the extent of refining of the glass, without increasing the pull rate and without detriment to the blanket of batch material;

c) combination of a) and b).

Advantageously the heat is removed from the body of molten glass at a region immediately below the fusion layer. The heat may be removed over selected areas, or generally over the whole of the area, other than (desirably) areas immediately adjacent to the walls of the furnace.

According to this invention there is also provided a glass melting furnace of the kind specified, comprising means which may be operated to remove heat from the material within the furnace at a region adjacent to the interface between the molten glass and the blanket of batch material.

Preferably said means is operative over one or more horizontally extending areas, preferably in a region immediately below the fusion layer. Preferably said means is selectively operable, advantageously both in the sense of varying the rate at which heat is removed from said area, and in relation to the area over which heat is removed.

Advantageously said means comprises a pipe system through which cooling fluid may be ducted, and which is or may be positioned in the furnace at a desired heightwise position. Advantageously the pipe system is a multi-pass system and is operative when cooling fluid is ducted therethrough to remove heat from an area of the body of molten glass immediately below the interface thereof with a blanket of batch material.

Desirably the furnace comprises a plurality of pipe systems, one or more of which may be operated selectively to remove heat from the furnace in such a manner, operation of a selected number of said plurality permitting variations in the extent of the area from which heat is removed.

Desirably said plurality included two pipe systems which extend in directions generally parallel to the axis of the primary movement of glass through the furnace, one on either side of said axis.

There will now be given a detailed description, to be read with reference to the accompanying drawing, of a glass melting furnace which is a preferred embodiment of this invention, and which has been selected for the purposes of illustrating the invention by way of example.

In the accompanying drawings:

FIGURE 1 is schematic plan view of the preferred embodiment;

FIGURE 2 is a schematic representation of a pipe system of the preferred embodiment.

The glass melting furnace which is the preferred embodiment of this invention is a typical small, cold-topped furnace, comprising vertically-extending side walls 10 and a bottom wall 14 defining an open-top furnace chamber 16. Extending through the bottom walls 14 is a plurality of vertical electrodes E1 to E4, and extending into the bottom wall is an outlet channel 17, through which molten glass is drawn, conventionally to a refining chamber.

The melting furnace is part of a glass melting plant comprising also a feeding mechanism for the delivery of raw glass making materials in solid state form (referred to herein as glass batch material) to the furnace chamber 16 through the open top thereof, in a manner such that the batch material lies on the top of the body of molten glass within the furnace chamber, to be progressively melted.

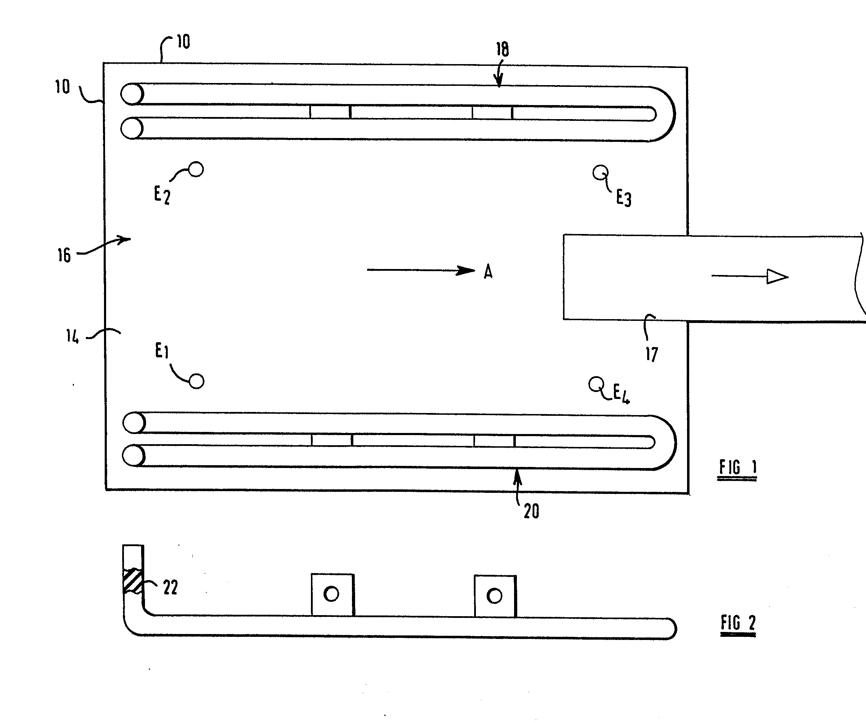

Mounted above the open top of the furnace, one either side of the axis of primary movement of the glass through the furnace (A in Figure 1) are two pipe systems 18, 20, each comprising a double-pass of mild steel, connected to a water pumping device by high duty rubber hoses 22.

During normal operation of the furnace, the pipe systems play no part, but if at any stage it becomes desirable to reduce the pull rate of the furnace, the supply of electricity to the electrodes E1 to E4 is temporarily switched off, and one or both pipe systems, dependent upon the extent of the reduction desired, are lowered through the blanket of batch material into operative positions just within the body of molten glass, a short distance (e.g. mm) below the transitional zone at which melting of the batch material normally takes place. Both pipe systems are spaced from the furnance walls, so as to avoid thermal shock thereto. Almost immediately a layer of glass begins to solidify on the pipes, reaching a thickness typically in the order of 25 mm, protecting the pipes from corrosion, reducing the temperature gradiant to which they will be subject, and effectively insulating them as conductors of electricity.

With the re-establishment of electric power, and the supply of water through the pipes, horizontally-extending "rafts" of cooled, high viscosity glass are formed over areas coextensive with the pipe systems, reducing the rate at which batch material is melted by the transference of heat from the body of molten glass to the underside of the batch blanket.

For example, the furnace which is the preferred embodiment of this invention has a melt area of $3.2m^2$, normally producing high quality soda-lime cosmetic ware at 10 t/d (ton per day) with a specific loading (delivery of batch) of 3.125 t/m $^2$/d, having a batch cover of 260 mm. The cold face temperature of the batch is approximately $160^{o}c$, resulting in surface losses of 2.4 kW/m $^2$. Were the pull rate to be reduced to 5 t/d, the specific loading would be reduced to 1.56 t/m $^2$/d. However since the temperature of the body of molten glass could not be reduced to any significant extent, the melt rate would exceed the pull rate, resulting in a reduction in the blanket thickness to about 10 mm, at which equilibrium would be re-established with a surface heat loss rate of 38.5 kW/m$^2$.

However by the use of the present invention, when the two pipe systems are lowered into the body of molten glass, the effective melt area is reduced by 20%, increasing the specific loading at 5 t/d from 1.56 to 1.95 t/m $^2$(equivalent to a pull rate of 6.24 t/d at the original melt area). The reduced area available for heat transfer to the batch reduces the melt rate generally to the pull rate, resulting in a substantial restoration of batch cover and a consequential reduction of surface losses to 7.9 kW/m$^2$.

Although the coolant in the two circuits results in a total heat extraction of 44 kW, this is more than off-set by a reduction in surface losses (convection and radiation) from 38.5 kW/m$^2$ to 7.9 kW/m$^2$ at 5 t/d.

Moreover, this embodiment enables high quality ware to be melted at a hitherto impractically low pull rate, dramatically increasing the flexibility of the melting system.

It will be appreciated that pipe systems may be arranged in a wide variety of configurations to meet preferred specific loadings, and, when operative, the charging patterns will be varied to accomodate the different rate of melting of batch material over different areas of the furnace.

It has been found that pipe systems which comprise mild steel pipes and which are cooled by water function perfectly satisfactorily, with the protective coating of solid glass which becomes deposited thereon.

It may be desired to coat the pipe with a protective material such as silica tube, but it is not believed that this would be necessary.

The features disclosed in the foregoing description, or the following claims, or the accompanying drawings, expressed in their specific forms or in terms of a means for performing the disclosed function, or a method or process for attaining the disclosed result, or a class or group of substances or compositions, as appropriate, may, separately or in any combination of such features, be utilised for realising the invention in diverse forms thereof.

**CLAIMS:**

1.   A method of melting glass involving the use of a glass melting furnace comprising a furnace chamber (16) for containing a body of molten glass, heating means (E1-E4) for heating the body of molten glass, and outlet means (17) through which glass is conducted from the chamber, in which method heat is removed from the material within the furnace at a region adjacent to the interface between the molten glass and the blanket of batch material.

2.   A method according to Claim 1 wherein the heat is removed from the body of molten glass at a region immediately below the fusion layer.

3.   A method according to one of Claims 1 and 2 wherein the heat is removed either over selected areas, or generally over the whole area other than areas immediately adjacent to the walls of the furnace.

4.   A glass melting furnace comprising a furnace chamber (16) for containing a body of molten glass, heating means (E1-E4) for heating the body of molten glass, and outlet means (17) through which glass is conducted from the chamber, characterised in that means (18, 20) are provided which may be operated to remove heat from the material within the furnace at a region adjacent to the interface between the molten glass and the blanket of batch material.

5.   A glass melting furnace according to Claim 4 wherein the means (18, 20) is operative over one or more horizontally extending areas, preferably in a region immediately below the fusion layer.

6.   A glass melting furnace according to one of Claims 4 and 5 wherein said means is selectively operable both in the sense of varying the rate at which heat is removed from said area and in relation to the area over which heat is removed.

7.   A glass melting furnace according to any one of Claims 4, 5 and 6 wherein said means comprises a pipe system (18, 20) through which cooling fluid may be ducted, and which is or may be positioned in the furnace at a desired heightwise position.

8.    A glass melting furnace according to Claim 7 wherein the pipe system (18, 20) is a multi-pass system and is operative when cooling fluid is ducted therethrough to remove heat from an area of the body of molten glass immediately below the interface thereof with the blanket of batch material.

9.    A glass melting furnace according to one of Claim 7 and 8 wherein the furnace comprises a plurality of pipe systems (18, 20), one or more of which may be operated selectively to remove heat from the furnace in such a manner, operation of a selected number of said plurality permitting variations in the extent of the area from which heat is removed.

10.    A glass melting furnace according to any one of Claims 4 to 9 wherein said plurality included two pipe systems (18 and 20) which extend in directions generally parallel to the axis (A) of primary movement of glass through the furnace, one on either side of said axis.

FIG 1

FIG 2

0206001

# EUROPEAN SEARCH REPORT

European Patent
Office

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-2 387 880 (CAMPBELL) <br><br> * Whole document * | 1-5,7, 10 | C 03 B 5/23 |
| X | US-A-3 495 966 (WEST) <br> * Figures 1-3; column 3, lines 7-63 * | 1-5 | |
| A | US-A-3 941 576 (WELTON) <br> * Whole document * | 1,4 | |
| A | FR-A-2 038 204 (FIRMA HERMANN HEYE) <br> * Figures 1,2,3 * | 1,4 | |

----

**TECHNICAL FIELDS SEARCHED (Int. Cl.4)**

C 03 B 5/00
C 03 B 7/00

The present search report has been drawn up for all claims

| Place of search | Date of completion of the search | Examiner |
|---|---|---|
| THE HAGUE | 04-07-1986 | VAN DEN BOSSCHE W.L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82